# EUROPÄISCHE PATENTSCHRIFT

(11) **EP 1 046 894 B1**
(45) Veröffentlichungstag und Bekanntmachung des Hinweises auf die Patenterteilung: **28.04.2004**
(21) Anmeldenummer: 00101417.4
(22) Anmeldetag: 25.01.2000
(51) Int. Cl.: G01M 5/00, G07C 3/00, G01L 5/00, G01N 3/06

(54) **Lebensdauer-Indikator für hochbeanspruchte Leichtbau-Strukturen**
Lifetime indicator for highly stressed lightweight structures
Indicateur de la durée de vie de structures légères, fortement sollicitées

(30) Priorität: 22.04.1999 DE 19918219
(43) Veröffentlichungstag der Anmeldung: 25.10.2000
(73) Patentinhaber: DORNIER GmbH, 88039 Friedrichshafen (DE)
(72) Erfinder: Dürr, Werner, 88697 Ahausen (DE)
(74) Vertreter: Meel, Thomas

(56) Entgegenhaltungen:
- US-A- 4 164 874
- US-A- 5 237 875
- US-A- 5 319 982

## Beschreibung

Die Erfindung betrifft einen Lebensdauer-Indikator für hochbeanspruchte Leichtbaustrukturen mit einem Materialstreifen als Probestab, der mindestens ein aussermittig im Probestab angeordnetes Loch und eine vom Rand des Loches in Richtung des Randes des Probestabs verlaufende Kerbe als Einrichtung zur Feststellung der Materialermüdung aufweist. Ein solcher Lebensdauer-Indikator ist aus der DE 43 38 850 A1 bekannt.

Aus der US 31 36 154 ist ein streifenförmiger Ermüdungs-Indikator mit Löchern oder Kerben bekannt, der auf der zu untersuchenden Struktur angebracht wird.

Aus der US 5,319,982 ist ein Lebensdauer-Indikator aus mehreren parallelen und untereinander verbundenen Materialstreifen bekannt. Die Streifen weisen auf einer Seite eine Einbuchtung auf. Vom Rand dieser Einbuchtung bis zum Rand der gegenüberliegenden Seite des Streifens ist eine Kerbe, bestehend aus einer Nut, mit rechtwinkligem Querschnitt vorhanden.

Moderne militärische Pionierbrücken sind fortschrittliche Leichtbau-Aluminiumkonstruktionen, gekennzeichnet durch einen hohen Werkstoff-Ausnutzungsgrad bei ― im Vergleich zu zivilen Brücken ― sehr niedrigen Überfahrtzahlen und hohen Lasten. Die relativ geringe Anzahl an garantierten Überfahrten macht es erforderlich, die Anzahl der erfolgten Überfahrten in Abhängigkeit von Überfahrtlast und verlegter Spannweite aufzuzeichnen, um eine zuverlässige Anzeige vor Erreichen der erlaubten Lebensdauer und ein Maß für die verbleibende Restlebensdauer zu erhalten. Bisher geschieht diese Aufzeichnung durch Führen eines Logbuches.

Als Stand der Technik für Lebensdauer-Indikatoren von metallischen Strukturen dieser Art sind neben dem o.a. Logbuch bekannt:
- die Überwachung der Struktur mit Hilfe von Dehnmeßstreifen, Zählwerk und entsprechender Auswerte-Elektronik,
- die Überwachung der Struktur mit Hilfe aufgeklebter Metallfolien, die durch erlebte Dehnung ihr Reflexionsverhalten ändern,
- eine Vorrichtung, die an der zu überwachenden Struktur angebracht ist und in die kleine, verschieden gekerbte Probestäbchen eingespannt sind.

Nachteilig ist, dass diese Indikatoren entweder elektrische Energie benötigen, keine Langzeit-stabile Verbindung zur Struktur besitzen, zu empfindlich und zu teuer für den ständigen Einsatz im Freien sind oder zusätzliche Randbedingungen, wie Materialstreuung und Umwelteinflüsse nur unzulänglich berücksichtigen.

Aufgabe der Erfindung ist es, einen robusten und zuverlässig ablesbaren Ermüdungs-Indikatior für Leichtbau-Strukturen zu schaffen.

Die Erfindung wird nachfolgend anhand von Fig. näher erläutert.

Es zeigen:
- Fig. 1: die Prinzipskizze eines erfindungsgemässen Ermüdungs-Indikatiors
- Fig. 2: ein Montagebeispiel für eine Gruppe von Ermüdungs-Indikatoren
- Fig. 3 und 4: axonometrische Darstellungen des Erfindungsgegenstandes.

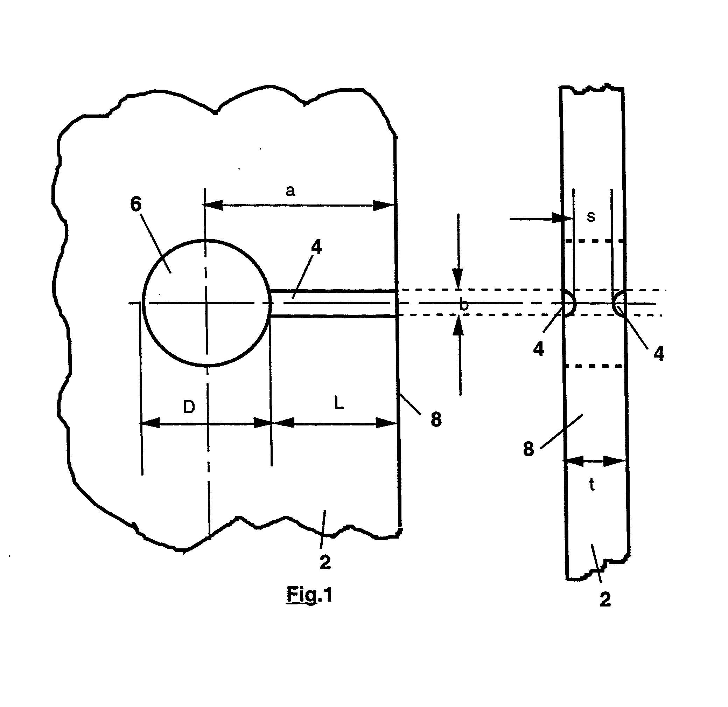

In Fig. 1 sind folgende Einzelheiten dargestellt:
Probestab 2 in Draufsicht und Seitenansicht. Bohrung 6 mit Bohrungsdurchmesser D und Abstand a der Bohrung 6 vom Seitenrand 8. Dicke t des Probestabs 2. Breite b der Kerbe 4, Ligamentstärke S und Ligamentlänge L.

Das Prinzip des erfindungsgemässen "Last-Zählers" beruht auf anmontierten, bruchmechanischen Probekörpern 2 aus identischem Material, wie die zu überwachende Struktur 10 mit verschieden scharfen Kerben 4. Der Zeitpunkt des Anreißens 12 oder Durchreißens der verschiedenen Probekörper ergibt ein Maß für die von der Struktur 10 "erlebte" Last-Historie. Werden identische, beliebig austauschbare Einzelabschnitte einer variabel zusammengesetzten Struktur 10 mit Indikatoren 2 versehen, so kann die Lebensdauer eines jeden Einzelabschnittes in Abhängigkeit von Einbauort und Lasthöhe registriert werden.

Die Probekörper sind auf das vorherrschende Spannungsniveau angepaßte Fatigueproben, wobei vom Probentypus her der Schwerpunkt ihrer "Lebensdauer" auf die Ermüdungs- oder Rißentstehungsphase und nicht auf die Rißfortschrittsphase gelegt wurde. Die erfindungsgemässe Kerbform 4 vermeidet Spannungskonzentration an der Kerbspitze, welche stark plastifiziert, die Startphase des Risses 12 beeinflußt und einer großen Streuung des Riß-Startzeitpunktes führt. Die erfindungsgemässe Kerbform vermeidet diesen Nachteil durch die Auslegung als "Ermüdungprobe" mit dreidimensionalem Spannungszustand im Kerb 4, deren Spannungskonzentration nicht höher als die höchste des zu überwachenden Bauteils ist.

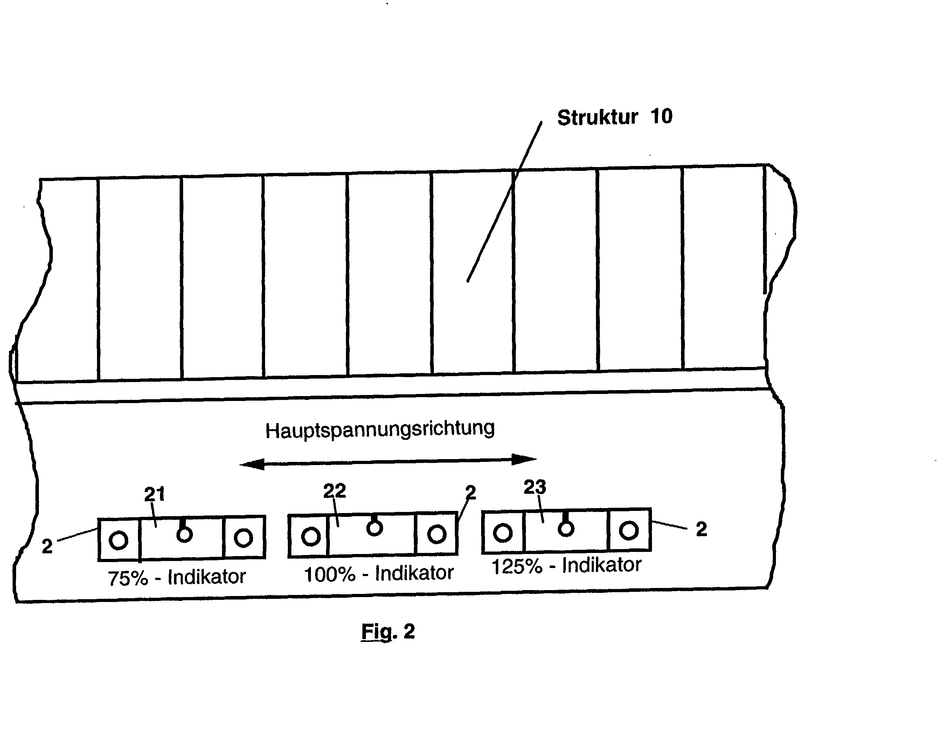

Dies wird wie in den Fig. 1 - 4 dargestellt durch die Kombination eines exzentrisch gelochten Materialstreifens als Probestab 2 mit einem zusätzlichen Seitenkerb 4 zwischen der Bohrung 6 und dem Probenrand 8. Die Bohrung 6 in der Nähe eines Randes 8 erzeugt einen Kerbfaktor αk ähnlich dem höchsten Kerbfaktor der zu überwachenden Struktur 10, während der Seitenkerb 4 zu einem erhöhten, dreidimensionalen Spannungszustand im Ligament führt. Der dreiachsige Spannungszustand unterbindet ein Plastifizieren im Kerbgrund und führt zu einer zuverlässigen, nahezu gleichförmigen Ermüdung des Restquerschnitts in voller Länge des Ligaments, infolge dessen der Kerbgrund nach kurzer Rißfortschrittsphase komplett durchgerissen 12 ist.
Die Anordnung dieser Kerbform 4 bewirkt ein zuverlässiges, schmalbandiges Durchreißen des Ligaments (Fig. 2) bei Erreichen der vorbestimmten Lastwechselzahl. Dabei fließen sowohl die spezifischen Materialeigenschaften als auch die Umwelteinflüsse wie Korrosion und Temperaturzyklen in das Ergebnis ein, da die Probekörper 2 aus dem identischen Material (Charge, Wärmebehandlung, Umformung, Korn-Orientierung) gefertigt sind und denselben Umwelteinflüssen wie die Struktur ausgesetzt sind.

Die Probekörper 2 werden auf die zu überwachende Struktur 10 getrimmt, indem ihre Geometrie auf das eingesetzte Material, auf die Strukturwandstärke, auf das Belastungsniveau, das Spannungsverhältnis und den angestrebten Lastwechselbereich angepaßt wird. Durch diese Anpaßbarkeit muß der Indikator nicht im Bereich der höchsten Spannungen montiert werden, sondern kann den Gegebenheiten entsprechend in günstigeren Bereichen angebracht werden ohne kritische Stellen noch zusätzlich zu schwächen. Um einen größeren Anzeigenbereich zu erhalten und die Streuung der Probekörper abzudecken werden in der Regel drei Indikatoren 21, 22, 23 (Fig. 2) mit verschieden scharf ausgebildeten Kerben hintereinander angebracht, so daß sie z.B. bei 75 %, 100 % und 125 % der erwarteten Lebensdauer eine Anzeige liefern. Das tatsächliche Versagen der Struktur erfolgt danach später entsprechend der Wahrscheinlichkeit/Zuverlässigkeit der Materialkennwerte, die ihrer Dimensionierung zugrunde lagen. Die Anbindung der Indikatoren an die zu überwachende Struktur 10 erfolgt kraft- und formschlüssig mittels spezieller Befestigungselemente oder bei dünnwandigen Strukturen mittels hochfester Scherzugniete.

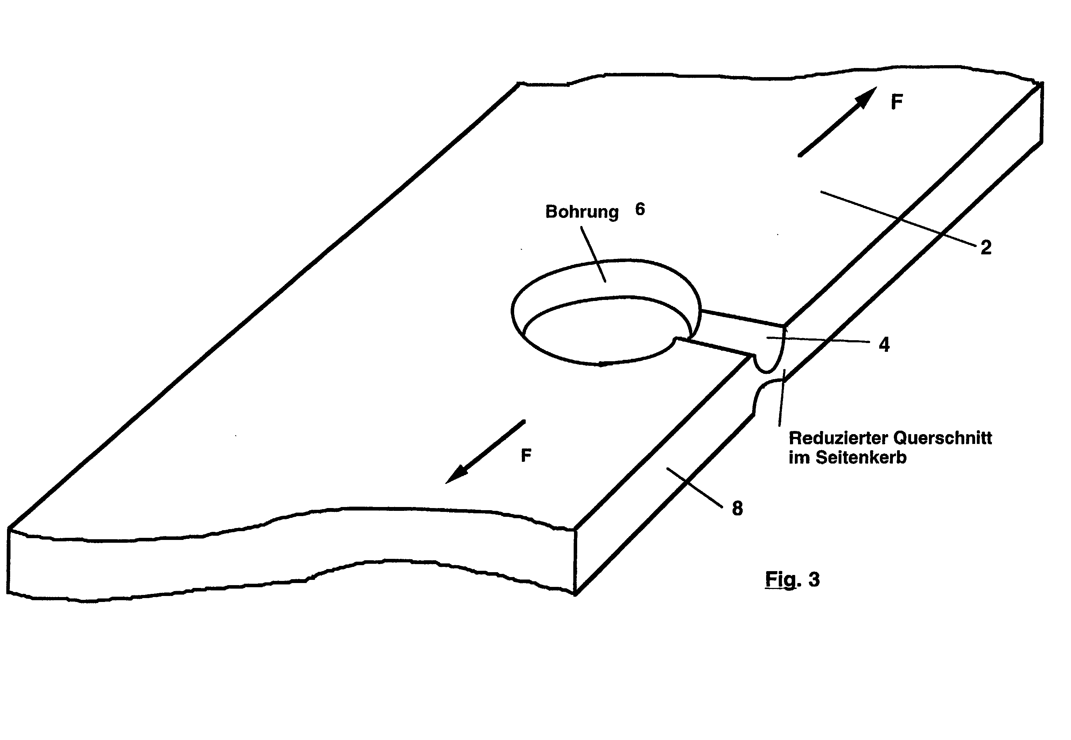

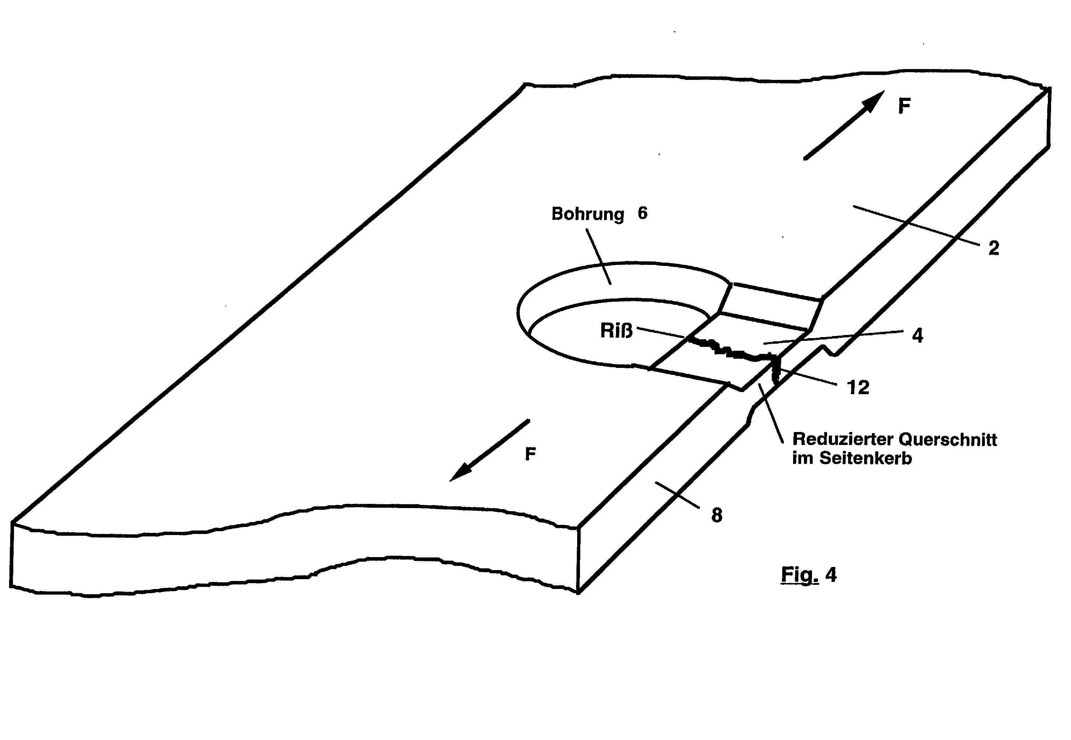

Durch die nachgewiesene Gültigkeit der Schadensakkumulations-Theorie nach Palmgreen-Miner werden auch die Lastwechsel mit niedrigerem oder höherem Lastniveau entsprechend ihrem Schädigungsäquivalent realitätsnah erfaßt. Reihenfolgeeinflüsse infolge Lastzyklen unterschiedlicher Lasthöhe sowie der Einfluß von einmaligem Überfahren einer bestimmten Überlast werden minimiert, dadurch daß eine Plastifizierung des Ligaments durch Auswahl der Kerbgeometrie (Fig. 3, 4) vermieden wird.

Die Ligamente s der einzelnen Probekörper 2 werden im Rahmen von Regelinspektionen mit einer speziellen Wirbelstromsonde abgetastet und eventuell durchgerissene Ligamente detektiert. Die Rißdetektion mittels Wirbelstrom erfolgt zuverlässig durch Lackschichten und Verschmutzung hindurch, zur Einengung des Lastwechsel-Anzeigenbereichs kann sogar der Anriß eines Ligamentes entdeckt werden. Der detektierte Befund wird sodann in ein Auswerteschema übertragen, welches einen Rückschluß auf die erlebte Last-Historie der Struktur liefert. Natürlich kann, eine entsprechende Zugänglichkeit und ein entsprechender Vorbereitungsaufwand vorausgesetzt, jedes andere geeignete Rißprüfverfahren zur Detektion der durchgerissenen Ligamente angewendet werden.

Vorteile des erfindungsgemässen Lebensdauer-Indikators:
- robust
- keine externe Energie notwendig
- "echter" Ermüdungsindikator, kein Rißfortschrittsanzeiger
- geringe Streuung durch identisches Material und kurze Rißfortschrittsphase
- Kerbfaktor ähnlich dem der zu überwachenden Struktur
- Riß im Indikator gefährdet nie die zu überwachende Struktur
- flexibel in der Anbringung, keine zusätzliche Schwächung der Struktur
- anpaßbar in Spannungsniveau und Anzeigenbereich
- günstig in der Fertigung und dadurch preiswert
- einfach und zuverlässig ablesbar

## Patentansprüche

1. Lebensdauer-Indikator für hochbeanspruchte Leichtbau-Strukturen mit einem Materialstreifen als Probestab (2), der mindestens ein aussermittig im Probestab (2) angeordnetes Loch (6) und eine vom Rand des Loches (6) in Richtung des Randes (8) des Probestabs (2) verlaufende Kerbe (4) als Einrichtung zur Feststellung der Materialermüdung aufweist, **dadurch gekennzeichnet, dass** das mindestens eine Loch eine Bohrung (6) ist und die Kerbe (4) zum nächstliegenden Rand (8) des Probestabs (2) verläuft, wobei die Kerbe (4) im Probestab (2) aus zwei sich gegenüberliegenden Nuten besteht, die im Querschnitt gleiche Formen aufweisen und die Kerbe (4) einen runden oder elliptischen oder ovalen oder v-förmigen oder trapez-förmigen Querschnitt aufweist.

2. Lebensdauer-Indikator nach Anspruch 1, **dadurch gekennzeichnet, dass** die Bohrung (6) im Probestab (2) einen kreisrunden oder ovalen oder elliptischen Querschnitt aufweist.

3. Lebensdauer-Indikator nach Anspruch 1, **dadurch gekennzeichnet, dass** der Probestab (2) aus identischem Material wie die Struktur (10) besteht.

## Claims

1. Lifetime indicator for highly stressed lightweight structures comprising a material strip as test bar (2) which has at least one hole (6) arranged eccentrically in the test bar (2), and an indentation (4) running from the edge of the hole (6) in the direction of the edge (8) of the test bar (2), as means for determining the material fatigue, **characterized in that** the at least one hole is a bore (6) and the indentation (4) runs to the nearest edge (8) of the test bar (2), the indentation (4) in the test bar (2) consisting of two grooves which are situated opposite each other and have the same shapes in cross section, and the indentation (4) having a round or elliptical or oval or v-shaped or trapezoidal cross section.

2. Lifetime indicator according to Claim 1, **characterized in that** the bore (6) in the test bar (2) has a circular or oval or elliptical cross section.

3. Lifetime indicator according to Claim 1, **characterized in that** the test bar (2) consists of material identical to that of the structure (10).

## Revendications

1. Indicateur de durée de vie pour des structures légères fortement sollicitées comportant une bande de matériau comme éprouvette (2), qui présente au moins un orifice (6) disposé dans l'éprouvette (2) de façon décentrée et une entaille (4) s'étendant depuis le bord de l'orifice (6) en direction du bord (8) de l'éprouvette (2) comme dispositif destiné à constater la fatigue du matériau, **caractérisé en ce qu'**au moins un orifice est un alésage (6) et l'entaille (4) s'étend jusqu'au bord le plus proche (8) de l'éprouvette (2), l'entaille étant constituée de deux rainures se faisant face qui présentent en section transversale des formes identiques et l'entaille (4) présentant une section transversale ronde ou elliptique ou ovale ou en forme de V ou trapézoïdale.

2. Indicateur de durée de vie selon la revendication 1 **caractérisé en ce que** l'alésage (6) dans l'éprouvette (2) présente une section transversale circulaire ou ovale ou elliptique.

3. Indicateur de durée de vie selon la revendication 1, **caractérisé en ce que** l'éprouvette (2) est constituée d'un matériau identique à celui de la structure (10).
